# EUROPÄISCHE PATENTSCHRIFT

(11) **EP 2 607 650 B1**
(45) Veröffentlichungstag und Bekanntmachung des Hinweises auf die Patenterteilung: **04.09.2024**
(21) Anmeldenummer: 12007017.2
(22) Anmeldetag: 10.10.2012
(51) Int. Cl.: F02C 6/12, F01D 17/14

(54) **Anordnung einer Drosseleinrichtung in einem Abgasturbolader**
Throttling assembly of a turbocharger
Dispositif d'étranglement d'un turbocompresseur

(30) Priorität: 23.12.2011 AT 18772011
(43) Veröffentlichungstag der Anmeldung: 26.06.2013
(73) Patentinhaber: MAN Truck & Bus SE, 80995 München (DE)
(72) Erfinder: Rammer, Franz, 4493 Wolfern (AT); Leitenmayr, Franz, 4320 Perg (AT); Klinger, Heidrun, 4400 Steyr (AT)
(74) Vertreter: v. Bezold & Partner Patentanwälte - PartG mbB

(56) Entgegenhaltungen:
- EP-A2- 1 801 392
- WO-A1-2010/151391
- DE-A1- 102009 019 437
- DE-A1- 2 044 026
- DE-A1- 2 813 638
- JP-A- H04 362 224
- US-A- 4 138 849

## Beschreibung

Die vorliegende Erfindung betrifft die Anordnung einer Drosseleinrichtung zum Steuern und/oder Regeln des Motorbremsbetriebs einer turboaufgeladenen Brennkraftmaschine für Kraftfahrzeuge gemäß dem Oberbegriff des Patentanspruchs 1.

Bei turboaufgeladenen Brennkraftmaschinen kann der Motorbremsbetrieb durch Drosseln des Abgassystems zum Beispiel über eine Klappe als Drosseleinrichtung dadurch gesteigert werden, dass die Drosseleinrichtung stromauf der Abgasturbine eingesetzt ist. Damit kann durch Steuern der Drosseleinrichtung die Förderleistung des über die Abgasturbine angetriebenen Verdichters bzw. der Ladedruck im Verbrennungsluft-Einlasssystem der Brennkraftmaschine gezielt angehoben werden, um den Luftdurchsatz (= Kühlung) und die Bremsleistung im Motorbremsbetrieb zu erhöhen. Die Drosseleinrichtung kann durch Klappen, Schieber, Drehschieber, etc. gebildet und zum Beispiel am Einströmflansch des Gehäuses des Abgasturboladers angebaut sein.

Weiter ist aus der DE 10 228 003 A1 ein Aufbau einer Turbine bekannt, bei der in aufwendiger Weise zwei zueinander versetzte Einströmkanäle in einer Abgasflut eines Turbinengehäuses versetzt zueinander angeordnet sind. In einem der Einströmkanäle ist ein Leitgitter mit unverstellbaren, starren Leitschaufeln und in dem zweiten Einströmkanal ist ein Leitgitter mit verstellbaren Leitschaufeln angeordnet. Eine derartige Kanalverzweigung mit unterschiedlich ausgebildeten Leitgittern ist ersichtlich aufwendig und damit teuer.

Zum weiteren Stand der Technik bezüglich Drosseleinrichtungen bei turboaufgeladenen Brennkraftmaschinen wird auf die EP 1 801 392 A2, die WO 2010/151391 A1, die US 4 138 849 A, die DE 10 2009 019437 A1, die DE 20 44 026 A1 und die JP H04 362224 A verwiesen.

Aufgabe der Erfindung ist es, eine Anordnung einer Drosseleinrichtung der gattungsgemä-ßen Art anzugeben, mittels der mit baulich einfachen Mitteln eine weitere Steigerung der Bremsleistung im Motorbremsbetrieb insbesondere bei niedrigeren Drehzahlen der Brennkraftmaschine erzielbar ist.

Die Lösung dieser Aufgabe gelingt mit den Merkmalen des Patentanspruchs 1. Vorteilhafte Ausgestaltungen und Weiterbildungen der Erfindung sind Gegenstand der Unteransprüche.

Erfindungsgemäß wird ein Abgasturbolader mit einer Drosseleinrichtung vorgeschlagen, wobei die Drosseleinrichtung zur Drosselung des Abgasstroms so im Mündungsbereich des wenigstens einen Einströmkanals in den Laufrad-Aufnahmeraum angeordnet ist, dass die Drosseleinrichtung in ihrer Geschlossenstellung den wenigstens einen Einströmkanal und damit die Strömungsverbindung zum Laufrad-Aufnahmeraum im Wesentlichen vollständig verschließt. Durch diese erfindungsgemäße Ausbildung und Anordnung der Drosseleinrichtung wird auf baulich einfache Weise sichergestellt, dass auch im untersten Drehzahlbereich der Brennkraftmaschine hohe Abgasgegendrücke und damit verbunden eine hohe Motorbremsleistung möglich ist.

Gemäß einer besonders bevorzugten Ausgestaltung ist weiter vorgesehen, dass in dem Gehäuse der Abgasturbine pro Abgasflut lediglich ein einziger Einströmkanal vorgesehen ist, der in einen zugeordneten Laufrad-Aufnahmeraum einmündet. Dadurch wird zum einen eine wesentliche bauliche Vereinfachung erzielt, zum Beispiel gegenüber einem Aufbau wie er in der eingangs genannten DE 10 228 003 A1 beschrieben ist, und zum anderen sichergestellt, dass die Gegendruckanhebung und damit verbunden eine höhere Motorbremsleistung im unteren Drehzahlbereich zuverlässig und schnell erreicht wird.

Insbesondere für den Fall, dass der wenigstens eine Einströmkanal im Mündungsbereich einen kleineren Kanalquerschnitt aufweist als im Bereich des stromauf liegenden, vorzugsweise mit einem Anschlussflansch versehenen Turbineneinlasses kann in Verbindung mit der Lage der Drosseleinrichtung nahe am Turbinenlaufrad weiter vorteilhaft ausgenutzt werden, dass bei einer kleinen Teilöffnung der Drosseleinrichtung wegen der Nähe der Drosseleinrichtung zum Turbinenrad und der kleinen Kanalquerschnitte das Abgas mit hoher Geschwindigkeit direkt auf das Turbinenrad geleitet wird. Dadurch wird das Turbinenrad stärker angetrieben, der Ladedruck wird gegenüber anderen herkömmlichen Lösungen angehoben und mit dem hohen Luftdrucksatz wird eine höhere Motorbremsleistung erzielt.

Bevorzugt ist zudem vorgesehen, dass der Laufrad-Aufnahmeraum zur Ausbildung des Mündungsbereichs des Einströmkanals sowie zur Ausbildung wenigstens eines Wandabschnittes des Einströmkanals einen spiralförmig nach innen zum Turbinenlaufrad hin eingezogenen Gehäusewandabschnitt aufweist, der eine Art Lippe ausbildet, die den Endbereich des Einströmkanals bildet. Dadurch wird eine fertigungstechnisch und funktionell günstige Anordnung geschaffen, die ohne wesentliche, bauliche Änderungen am Gehäuse der Abgasturbine verwirklichbar ist.

Erfindungsgemäß wird vorgeschlagen, dass die Drosseleinrichtung in baulich einfacher Weise als zumindest eine schwenkbare Klappe ausgebildet ist. Diese verschließt in der geschlossenen Stellung den Strömungskanal im wesentlichen vollständig und gibt in der vollständig geöffneten Stellung den Strömungskanal bevorzugt vollständig frei, so dass diese keine Strömungsbehinderung verursacht. Um letzteres sicherzustellen wird vorgeschlagen, die die Drosseleinrichtung ausbildende schwenkbare Klappe in deren vollständig geöffneter Stellung mit ihrer dem Einströmkanal und/oder dem Laufrad-Aufnahmeraum zugewandten Seite, im Wesentlichen oberflächenbündig mit dem angrenzenden Gehäusewandbereich, in einer gehäusewandseitigen Ausnehmung einliegen zu lassen, so dass diese in dieser Stellung einen im Wesentlichen durchgehend glatten und/oder ebenen Gehäusewandabschnitt ausbildet.

Weiter kann in vorteilhafter Weiterbildung der Erfindung die Klappe über eine zur Turbinendrehachse parallele Schwenkachse auf einfache Weise verstellbar sein.

Gemäß einer weiteren besonders bevorzugten Ausgestaltung der vorliegenden Erfindungsidee ist die Drosseleinrichtung bevorzugt so ausgebildet, dass diese in wenigstens einer definierten Offenstellung, bevorzugt in einer mit Bezug zur vollständig geöffneten Stellung kleineren oder größeren Offenstellung, den Gasstrom düsenförmig auf die Turbine lenkt. Damit gelingt es in besonderem Maße, die Leistung der Abgasturbine in einer Art Stoßaufladung durch den Gasstromimpuls bei niedrigeren Drehzahlen der Brennkraftmaschine weiter anzuheben.

Bei höheren Drehzahlen wird die Drosseleinrichtung weiter geöffnet und durch die Lage der Drosseleinrichtung in den kleinen Kanalquerschnitt nahe dem Turbinenrad kann die Druckenergie des Abgases mit einem höheren Wirkungsgrad in mehr Geschwindigkeitsenergie für die Abgasturbine umgewandelt werden.

In einer weiteren Ausgestaltung der Erfindung kann die Drosseleinrichtung bei einem Abgasturbolader mit variabler Turbinengeometrie und einer um das Turbinenlaufrad angeordneten Leiteinrichtung stromauf sowie unmittelbar benachbart zu der Leiteinrichtung positioniert sein. Die Drosseleinrichtung ist dabei bevorzugt so ausgebildet, dass diese in wenigstens einer Offenstellung, insbesondere in wenigstens einer definierten Zwischenstellung zwischen einer vollständig geschlossenen und einer vollständig geöffneten Stellung, den Abgasstrom auf die Leiteinrichtung lenkt. Insbesondere wenn bei definiertem Motorbremsbetrieb die Drosseleinrichtung und die Leiteinrichtung zur Erzielung eines definierten Gasdurchsatzes der Abgasturbine betätigt sind, bildet dies eine weitere, funktionell vorteilhafte Möglichkeit der Steuerung bzw. Regelung des einlassseitigen Ladedrucks bzw. des Motorbremsbetriebs angepasst auf die jeweils vorherrschenden Betriebsbedingungen. Weiter kann durch das Druckgefälle an der Drosseleinrichtung ein in Strömungsrichtung nach der Drossel angeordnetes verstellbares Leitgitter wegen des dort geringen Drucks entlastet werden, wodurch dessen Lebensdauer erhöht wird bzw. höhere Motorbremsleistungen erzielt werden können. Des Weiteren kann bei einem Abgasturbolader mit einer Waste-Gate-Einrichtung zum Absenken des Ladedruckes in der Ladeluftleitung der Brennkraftmaschine der abgasabführende Kanal stromab der Drosseleinrichtung vom Turbinengehäuse abzweigen. Dies hat den Vorteil, dass bei Motorbremsbetrieb die Abgasdrücke stromab der Drosseleinrichtung niedriger sind und deshalb die Waste-Gate-Einrichtung weniger belasten. Grundsätzlich könnte die Waste-Gate-Einrichtung aber auch stromauf der Drosseleinrichtung abzweigen, falls der eben genannte Vorteil nicht erwünscht sein sollte oder bauliche Zwänge dies vorgeben.

Bei einer zweiflutigen Abgasturbine werden erfindungsgemäß beide Einströmkanäle mit einer Drosseleinrichtung versehen, die baulich und steuerungstechnisch besonders einfach durch eine beide Einströmkanäle im Querschnitt steuernde Doppelklappe gebildet sind.

Schließlich können in besonders zweckmäßiger Weise die Drosseleinrichtung und/oder eine Leiteinrichtung der variablen Turbinengeometrie im Motorbremsbetrieb unter anderem abhängig vom Ladedruck in der Ladedruckleitung der Brennkraftmaschine gesteuert sein, um somit eine an die Betriebszustände der Brennkraftmaschine (Drehzahl, Temperatur, etc.) und des Kraftfahrzeugs (Geschwindigkeit) angepasste Motorbremsleistung einzusteuern oder zu regeln.

Die erfindungsgemäße Aufgabe wird ferner gelöst mit einer Verfahrensführung gemäß Anspruch 12. Die sich dadurch ergebenden Vorteile wurden bereits zuvor in Verbindung mit der Anordnung der Drosseleinrichtung näher erläutert, so dass diesbezüglich auf die zuvor gemachten Ausführungen verwiesen wird.

Zwei Ausführungsbeispiele der Erfindung sind im Folgenden mit weiteren Einzelheiten schematisch und beispielhaft näher erläutert.

Es zeigen:
- Fig. 1: einen Querschnitt durch eine Abgasturbine eines Abgasturboladers für eine Diesel-Brennkraftmaschine mit einer in deren Strömungskanal integrierten Klappe für einen Motorbremsbetrieb und einem um die Abgasturbine angeordneten Leitapparat;
- Fig. 2: in raumbildlicher Darstellung einen Abgasturbolader mit einer zweiflutigen Abgasturbine mit einer in die beiden Strömungskanäle der Abgasturbine integrierten Doppelklappe für den Motorbremsbetrieb; und
- Fig. 3: die Doppelklappe nach Fig. 2 in Einzeldarstellung.

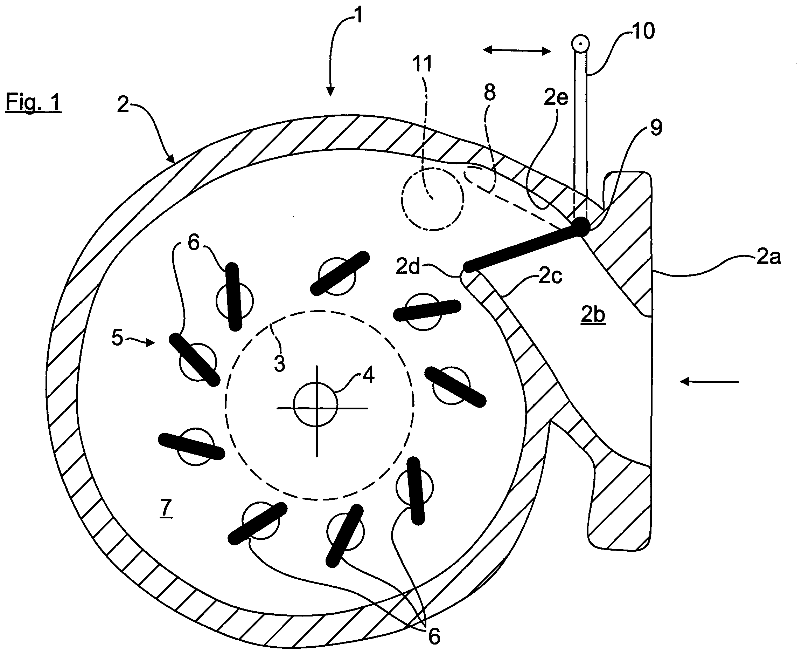

Die Fig. 1 zeigt grob schematisch einen Querschnitt durch eine Abgasturbine 1 eines Abgasturboladers für eine selbstzündende Brennkraftmaschine für Kraftfahrzeuge. Soweit nicht beschrieben ist der Abgasturbolader bekannter Bauart mit einem Lagergehäuse, einem Verdichtergehäuse und dem Gehäuse 2 der Abgasturbine 1.

In dem im Querschnitt spiralförmigen Gehäuse 2 ist das nur in gestrichelten Linien angedeutete Turbinenlaufrad 3 auf einer Welle 4 angeordnet, wobei die Welle 4 das nicht dargestellte Verdichterlaufrad des Verdichters des Abgasturboladers antreibt.

Um das Turbinenlaufrad 3 ist eine Leiteinrichtung bzw. ein Leitapparat 5 mit verstellbaren Strömungsleitschaufeln 6 angeordnet, die über einen nicht dargestellten Verstellmechanismus zur Steuerung der Antriebsleistung bzw. des Schluckvermögens des Turbinenlaufrads 3 verstellbar sind und dementsprechend auch als Drosseleinrichtung wirken können.

Das Gehäuse 2 der Abgasturbine weist einen einen Anschlussflansch aufweisenden Turbineneinlass 2a auf, an den ein in den Spiralkanal 7 als Laufrad-Aufnahmeraum des Gehäuses 2 mündender Einströmkanal 2b anschließt. An den Turbineneinlass 2a ist in bekannter Weise das stromauf liegende Abgasleitungssystem der Brennkraftmaschine angeschlossen.

Das Abgas strömt in Pfeilrichtung über den Turbineneinlass 2a in das Gehäuse 2 ein, durchströmt über den Einströmkanal 2a und den Spiralkanal 7 den Leitapparat 5 und das Turbinenlaufrad 3 und strömt dann zentral und etwa senkrecht zur Zeichnungsebene in das weitere Abgasleitungssystem in die Atmosphäre ab.

In dem über einen Gehäusewandabschnitt 2c vom Spiralkanal 7 abgeteilten Einströmkanal 2b ist nahe dem Turbinenlaufrad 3 bzw. dem Leitapparat 5 eine Drosseleinrichtung in Form einer schwenkbaren Klappe 8 angeordnet, die von einer geschlossenen, den Einströmkanal 2b verschließenden Stellung (in ausgezogenen Linien gezeichnet) in eine vollständig offene Stellung (in gestrichelten Linien angedeutet) verstellbar ist.

In der vollständig geschlossenen Stellung schlägt die in Strömungsrichtung gezielt unter einem definierten Winkel schräg bzw. winklig ausgerichtete Klappe 8 an der Stirnseite 2d der Gehäusewand 2c an und verschließt dadurch den Einströmkanal 2b, während sie in der voll geöffneten Stellung so in eine an die Klappe 8 angepasste Ausnehmung bzw. Vertiefung 2e eingeschwenkt ist, dass deren dem Spiralkanal 7 zugewandte Oberfläche bündig zum angrenzenden Wandbereich des Spiralkanals 7 verläuft und dort eine im wesentlichen durchgehend glatte bzw. ebene Kanalwand ausbildet, die die Abgasströmung nicht beeinträchtigt und insbesondere hilft, unerwünschte Strömungsturbulenzen zu vermeiden.

Die Klappe 8 ist über eine in dem Gehäuse 2 gelagerte Welle 9 mit einer achsparallel zur Drehachse des Turbinenlaufrads 3 ausgerichteten Schwenkachse verstellbar, wobei die Welle 9 über einen Stellhebel 10 und einen zum Beispiel hydraulisch beaufschlagbaren Stellmotor und eine den Motorbremsbetrieb steuernde, elektronische Steuer- und/oder Regeleinrichtung (nicht dargestellt) betätigbar ist.

Die Klappe 8 kann in Zwischenstellungen eingestellt werden, in denen sie mit der Gehäusewand 2c bzw. deren Stirnseite 2d eine im Durchströmquerschnitt mehr oder minder wirksame Düse bildet, die das Abgas unmittelbar auf den Leitapparat 5 und das Turbinenlaufrad 3 lenkt. In teilweise geöffneter Position stellt sich eine erhebliche Druckdifferenz an der Klappe ein. Das Abgas wird auf einen niedrigeren Druck expandiert, wodurch die dadurch entstehende Volumenzunahme, die Strömungsgeschwindigkeit des Abgases signifikant erhöht wird und dadurch auch der Abgasturbine wesentlich mehr Energie zur Verfügung steht. Gleichzeitig wird durch den reduzierten Druck nach der Klappe der Leitapparat, sofern ein solcher vorhanden ist, und auch die Wellenabdichtung erheblich entlastet.

Die Klappe 8 wird bei Schubbetrieb der Brennkraftmaschine im Kraftfahrzeug und bei eingesteuertem Motorbremsbetrieb abhängig unter anderem vom Ladedruck in der Ladedruckleitung der Brennkraftmaschine so in Schließstellung bzw. in eine Zwischenstellung verstellt, dass die Abgasturbine 1 durch entsprechenden Antrieb des Verdichters einen definierten Ladedruck aufrechterhält, um somit einen hohen Luftdurchsatz durch die Brennkraftmaschine und damit verbunden durch den erhöhten Abgasgegendruck eine hohe Motorbremsleistung sicherstellt.

Dabei können Motordrehzahl, Fahrzeuggeschwindigkeit, Druck- und Temperaturverhältnisse, etc. regelungstechnisch erfasst und durch Einsteuerung oder Regelung der Zwischenstellungen der Klappe 8 berücksichtigt werden. Ferner kann auch der Leitapparat 5 des Abgasturboladers 1 mit variabler Turbinengeometrie durch Verstellung der Anstellwinkel der Leitschaufeln 6 in die Regelung mit einbezogen sein.

Der Abgasturbolader mit der beschriebenen Abgasturbine 1 weist auch eine in das Gehäuse 2 integrierte Waste-Gate-Einrichtung auf, die sich zum Beispiel aus einer das Turbinenlaufrad 3 umgehenden Bypassleitung und einem integrierten Bypassventil zusammensetzt und die dazu dient, bei höherer Leistungsanforderung an der Brennkraftmaschine mit hohen Abgasmengen Abgas an dem Turbinenlaufrad 3 vorbeizuführen, um den Ladedruck in der einlassseitigen Ladedruckleitung zu begrenzen oder Überdrehzahlen zu vermeiden.

Dabei ist die Mündung der Bypassleitung 11 (nur strichpunktiert angedeutet) stromab der Klappe 8 positioniert. Dies stellt sicher, dass der bei Motorbremsbetrieb im Abgasleitungssystem stromauf der Klappe 8 anliegende, hohe Abgasdruck nicht auf das Bypassventil der Waste-Gate-Einrichtung wirken kann; gleiches gilt für den Leitapparat 5, der ebenfalls entsprechend weniger belastet ist. Die Ansteuerung der Waste-Gate-Einrichtung kann im Bremsbetrieb ebenfalls zur Ladedruckregelung und damit zur Regelung der Bremsleitung verwendet werden.

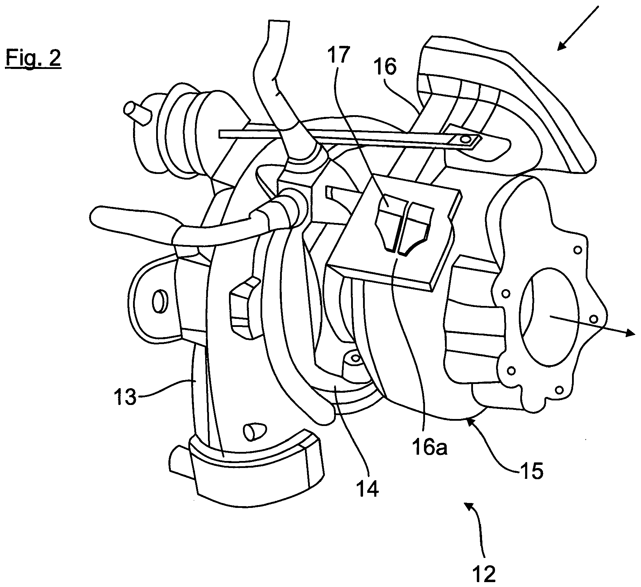

Die Fig. 2 zeigt in raumbildlicher Darstellung einen Abgasturbolader 12 mit einem Verdichter 13, einem Lagergehäuse 14 und einer zweiflutigen Abgasturbine 15, die soweit nicht beschrieben bekannter Bauart ist.

Das Gehäuse 16 der Abgasturbine 15 weist hier somit zwei parallel zueinander ausgerichtete Spiralkanäle, Einströmkanäle und flanschförmige Turbineneinlässe (ähnlich Fig. 1) auf, die über eine durchgehende Gehäusewand 16a die zwei Abgasfluten bilden, über die das entsprechend ausgeführte Turbinenlaufrad (nicht ersichtlich) getrennt oder gemeinsam mit Abgas beaufschlagbar ist. Die Querschnitte der beiden Abgasfluten können in bekannter Weise unterschiedlich groß ausgeführt sein.

In den beiden Einströmkanälen des Gehäuses 16 sind wie zur Fig. 1 beschrieben Klappen 17a, 17b (in Fig. 2 offenliegend dargestellt) zum Steuern eines Motorbremsbetriebs der Brennkraftmaschine schwenkbar über eine Welle 9 und betätigbar mittels eines Stellhebels 10 angeordnet.

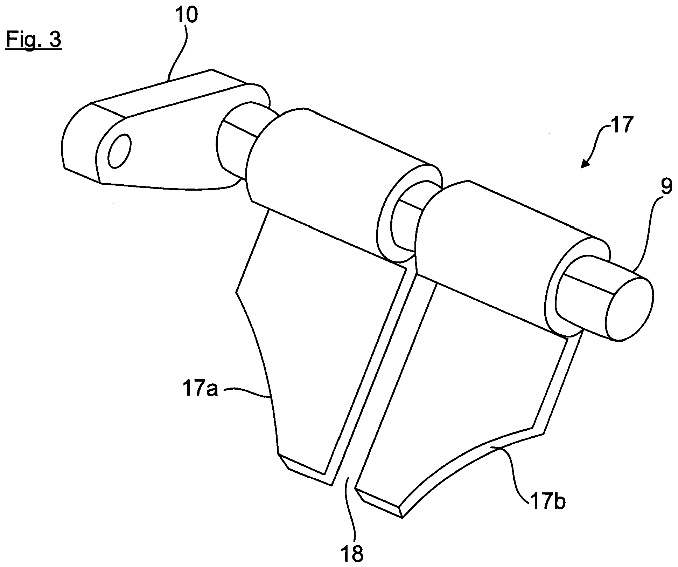

Wie insbesondere die Fig. 3 zeigt, sind die Klappen 17a, 17b durch eine auf der Welle 9 befestigte Doppelklappe 17 gebildet, die zwischen sich einen Abstand 18 für die trennende Gehäusewand 16a aufweisen und die im Übrigen an die Querschnittsformen der beiden Einströmkanäle im Gehäuse 16 der Abgasturbine 15 angepasst sind. Es ist aber grundsätzlich auch möglich, die Flutentrennung nur bis zur Klappe zu führen. In diesem Fall endet die Trennwand an der geschlossenen Klappe und diese kann dann einflutig ausgeführt werden.

Die Anordnung im Gehäuse 16 und die Funktion der Doppelklappe 17 im Motorbremsbetrieb ist entsprechend der Einzelklappe 8 gemäß Fig. 1 und deshalb zur Vermeidung von Wiederholungen nicht nochmals erläutert.

Alternativ könnten die Klappen 17a, 17b auch getrennt betätigbar angeordnet sein, um somit einen weiteren Freiheitsgrad in der Steuerung des Motorbremsbetriebs bzw. der gewünschten Bremsleistung zu schaffen, was jedoch den Steuerungsaufwand entsprechend erhöhen würde.

### Bezuaszeichenliste

- 1: Abgasturbine
- 2: Gehäuse
- 2a: Turbineneinlass
- 2b: Einströmkanal
- 2c: Gehäusewand
- 2d: Stirnseite
- 2e: Vertiefung
- 3: Turbinenlaufrad
- 4: Welle
- 5: Leitapparat
- 6: Leitschaufeln
- 7: Spiralkanal
- 8: Klappe
- 9: Welle
- 10: Stellhebel
- 11: Bypasskanalmündung
- 12: Abgasturbolader
- 13: Verdichter
- 14: Lagergehäuse
- 15: Abgasturbine
- 16: Gehäuse
- 16a: Gehäusewand
- 17: Doppelklappe
- 17a: Klappe
- 17b: Klappe
- 18: Abstand

## Patentansprüche

1. Abgasturbolader für eine aufgeladene, insbesondere selbstzündende, Brennkraftmaschine eines Kraftfahrzeugs, mit
einer Drosseleinrichtung zum Steuern und/oder Regeln des Motorbremsbetriebs der mittels des Abgasturboladers aufgeladenen Brennkraftmaschine ,
wobei der Abgasturbolader zumindest eine ein- oder mehrflutige Abgasturbine (1; 15) aufweist, in deren Gehäuse (2; 16) wenigstens ein Einströmkanal (2b) ausgebildet ist, in dem eine Drosseleinrichtung (8; 17) stromauf sowie benachbart zu einem in einem Laufrad-Aufnahmeraum (7) des Gehäuses (2; 16) aufgenommenen Turbinenlaufrad (3) integriert ist, und
wobei die Drosseleinrichtung (8; 17) so im Mündungsbereich des wenigstens einen Einströmkanals (2b) in den Laufrad-Aufnahmeraum (7) angeordnet ist, dass die Drosseleinrichtung (8; 17) in ihrer Geschlossenstellung den wenigstens einen Einströmkanal (2b) und damit die Strömungsverbindung zum Laufrad-Aufnahmeraum (7) im Wesentlichen vollständig verschließt,
**dadurch gekennzeichnet, dass**
die Drosseleinrichtung (8; 17) durch wenigstens eine schwenkbare Klappe ausgebildet ist, oder
bei einer zweiflutigen Abgasturbine (15) beide Einströmkanäle (2b) mit je einer Drosseleinrichtung (17) versehen sind, wobei die Drosseleinrichtungen (17) durch eine beide Einströmkanäle (2b) im Querschnitt steuernde Doppelklappe gebildet sind.

2. Abgasturbolader nach Anspruch 1, **dadurch gekennzeichnet, dass** in dem Gehäuse (2; 16) der Abgasturbine (1; 15) pro Abgasflut ein einziger Einströmkanal (2b) vorgesehen ist, der in einen zugeordneten Laufrad-Aufnahmeraum (7) einmündet.

3. Abgasturbolader nach Anspruch 1 oder 2, **dadurch gekennzeichnet, dass** der wenigstens eine Einströmkanal (2b) im Mündungsbereich einen kleineren Kanalquerschnitt aufweist als im Bereich des stromauf liegenden, vorzugsweise mit einem Anschlussflansch versehenen Turbineneinlasses (2a).

4. Abgasturbolader nach einem der vorhergehenden Ansprüche, **dadurch gekennzeichnet, dass** der Laufrad-Aufnahmeraum (7) zur Ausbildung des Mündungsbereichs des Einströmkanals (2b) sowie zur Ausbildung wenigstens eines Wandabschnittes des Einströmkanals (2b) einen spiralförmig nach innen zum Turbinenlaufrad (3) hin eingezogenen Gehäusewandabschnitt (2c) aufweist.

5. Abgasturbolader nach einem der vorhergehenden Ansprüche, **dadurch gekennzeichnet, dass** die die Drosseleinrichtung (8; 17) ausbildende schwenkbare Klappe in deren vollständig geöffneter Stellung mit ihrer dem Einströmkanal (2b) und/oder dem Laufrad-Aufnahmeraum (7) zugewandten Seite, im Wesentlichen oberflächenbündig mit dem angrenzenden Gehäusewandbereich, in einer gehäusewandseitigen Ausnehmung (2e) einliegt und einen im Wesentlichen durchgehend glatten und/oder ebenen Gehäusewandabschnitt ausbildet.

6. Abgasturbolader nach einem der vorhergehenden Ansprüche, **dadurch gekennzeichnet, dass** die Klappe (8; 17) über eine zur Drehachse des Turbinenlaufrads (3) parallele Schwenkachse (9) verstellbar ist.

7. Abgasturbolader nach einem der vorhergehenden Ansprüche, **dadurch gekennzeichnet, dass** die Drosseleinrichtung (8; 17) so ausgebildet ist, dass diese in wenigstens einer definierten Offenstellung den Abgasstrom düsenförmig auf das Turbinenlaufrad (3) lenkt.

8. Abgasturbolader nach einem der vorhergehenden Ansprüche, **dadurch gekennzeichnet,**
**dass** die Drosseleinrichtung (8; 17) bei einer Abgasturbine (1; 15) mit variabler Turbinengeometrie und einer um das Turbinenlaufrad (3) angeordneten Leiteinrichtung (5) stromauf sowie unmittelbar benachbart zu der Leiteinrichtung (5) positioniert ist, und
**dass** die Drosseleinrichtung (8; 17) so ausgebildet ist, dass diese in wenigstens einer Offenstellung, insbesondere in wenigstens einer definierten Zwischenstellung zwischen einer vollständig geschlossenen und einer vollständig geöffneten Stellung, den Abgasstrom auf die Leiteinrichtung (5) lenkt.

9. Abgasturbolader nach Anspruch 8, **dadurch gekennzeichnet, dass** bei definiertem Motorbremsbetrieb die Drosseleinrichtung (8; 17) und die Leiteinrichtung (5) zur Erzielung eines definierten Gasdurchsatzes der Abgasturbine (1; 15) gemeinsam betätigbar und in definierte, aufeinander abgestimmte Stellungen verstellbar sind.

10. Abgasturbolader nach einem der vorhergehenden Ansprüche, **dadurch gekennzeichnet, dass** bei einem Abgasturbolader mit einer Waste-Gate-Einrichtung zum Absenken des Ladedruckes in der Ladeluftleitung der Brennkraftmaschine, ein abgasabführender Kanal (11) stromab der Drosseleinrichtung (8; 17) vom Gehäuse (2; 16) abzweigt.

11. Abgasturbolader nach einem der vorhergehenden Ansprüche, **dadurch gekennzeichnet, dass** die Drosseleinrichtung (8; 17) und/oder im Falle einer variablen Turbinengeometrie die Leiteinrichtung (5) im Motorbremsbetrieb wenigstens abhängig vom Ladedruck in einer Ladedruckleitung der Brennkraftmaschine gesteuert sind.

12. Verfahren zum Betreiben eines Abgasturboladers nach einem der vorhergehenden Ansprüche, **dadurch gekennzeichnet, dass** die Anordnung eine Steuer- und/oder Regeleinrichtung aufweist, mittels der die Stellung der Drosseleinrichtung (8; 17) und/oder einer Leiteinrichtung (5) einer variablen Turbinengeometrie in Abhängigkeit von definierten Motorbremsbetriebparametern gesteuert wird.

## Claims

1. An exhaust gas turbocharger for a supercharged, in particular compression-ignited, internal combustion engine of a motor vehicle, comprising
a throttle device for controlling and/or regulating the engine braking operation of the internal combustion engine supercharged by means of the exhaust gas turbocharger,
wherein the exhaust gas turbocharger comprises at least one single-flow or multi-flow exhaust gas turbine (1; 15), in the housing (2; 16) of which at least one inflow channel (2b) is formed, in which a throttle device (8; 17) is integrated upstream of and adjacent to a turbine impeller (3) received in an impeller receiving space (7) of the housing (2; 16), and
wherein the throttle device (8; 17) is arranged in a mouth region of the at least one inflow channel (2b) into the impeller receiving space (7) in such a way that the throttle device (8; 17), in its closed position, substantially completely closes the at least one inflow channel (2b) and thus the flow connection to the impeller receiving space (7),
**characterised in that**
the throttle device (8; 17) is formed by at least one pivotable flap, or
in the case of a two-flow exhaust gas turbine (15), both inflow channels (2b) are each provided with a throttle device (17), wherein the throttle devices (17) are formed by a double flap controlling both inflow channels (2b) in cross-section.

2. The exhaust gas turbocharger according to claim 1, **characterised in that** a single inflow channel (2b) is provided in the housing (2; 16) of the exhaust gas turbine (1; 15) for each exhaust gas line, which inflow channel opens into an associated impeller receiving space (7).

3. The exhaust gas turbocharger according to claim 1 or 2, **characterised in that** the at least one inflow channel (2b) comprises a smaller channel cross-section in the mouth region than in a portion of the upstream turbine inlet (2a), which is preferably provided with a connecting flange.

4. The exhaust gas turbocharger according to one of the preceding claims, **characterised in that** the impeller receiving space (7) comprises a housing wall section (2c) drawn in spirally inwards towards the turbine impeller (3) to form the mouth region of the inflow channel (2b) and to form at least one wall section of the inflow channel (2b).

5. The exhaust gas turbocharger according to one of the preceding claims, **characterised in that** the pivotable flap forming the throttle device (8; 17), in its fully open position, lies with its side facing the inflow channel (2b) and/or the impeller receiving space (7), substantially flush with a surface of the adjacent housing wall region, in a recess (2e) on a housing wall side and forms a substantially continuously smooth and/or flat housing wall section.

6. The exhaust gas turbocharger according to one of the preceding claims, **characterised in that** the flap (8; 17) is adjustable via a pivot axis (9) which is parallel to the axis of rotation of the turbine impeller (3).

7. The exhaust gas turbocharger according to one of the preceding claims, **characterised in that** the throttle device (8; 17) is configured such that, in at least one defined open position, it directs the exhaust gas flow onto the turbine impeller (3) in a nozzle-shaped manner.

8. The exhaust gas turbocharger according to one of the preceding claims, **characterised**
**in that** the throttle device (8; 17) is positioned upstream and directly adjacent to the guide device (5) in the case of an exhaust gas turbine (1; 15) with variable turbine geometry and a guide device (5) arranged around the turbine impeller (3), and
**in that** the throttle device (8; 17) is configured such that, in at least one open position, in particular in at least one defined intermediate position between a fully closed and a fully open position, it directs the exhaust gas flow onto the guide device (5).

9. The exhaust gas turbocharger according to claim 8, **characterised in that**, during defined engine braking operation, the throttle device (8; 17) and the guide device (5) can be actuated together to achieve a defined gas throughput of the exhaust gas turbine (1; 15) and can be adjusted into defined, coordinated positions.

10. The exhaust gas turbocharger according to one of the preceding claims, **characterised in that** in an exhaust gas turbocharger with a waste gate device for lowering the charge pressure in the charge air line of the internal combustion engine, an exhaust gas discharge channel (11) branches off from the housing (2; 16) downstream of the throttle device (8; 17).

11. The exhaust gas turbocharger according to one of the preceding claims, **characterised in that** the throttle device (8; 17) and/or, in the case of a variable turbine geometry, the guide device (5) are controlled in engine braking operation at least as a function of a charge pressure in a charge pressure line of the internal combustion engine.

12. A method for operating an exhaust gas turbocharger according to one of the preceding claims, **characterised in that** the arrangement comprises a control and/or regulating device by means of which the position of the throttle device (8; 17) and/or a guide device (5) of a variable turbine geometry is controlled as a function of defined engine braking operation parameters.

## Revendications

1. Turbocompresseur à gaz d'échappement pour un moteur à combustion interne suralimenté, notamment à auto-allumage, d'un véhicule automobile, avec
un dispositif d'étranglement pour commander et/ou réguler le mode de freinage de moteur du moteur à combustion interne suralimenté au moyen du turbocompresseur à gaz d'échappement,
le turbocompresseur à gaz d'échappement présentant au moins une turbine à gaz d'échappement (1 ; 15) à un ou plusieurs flux, dans le boîtier (2 ; 16) de laquelle est réalisé au moins un canal d'admission (2b) dans lequel un dispositif d'étranglement (8 ; 17) est intégré en amont ainsi qu'au voisinage d'une roue de turbine (3) reçue dans un espace de réception de roue (7) du boîtier (2 ; 16), et
le dispositif d'étranglement (8 ; 17) étant agencé dans la zone d'embouchure de l'au moins un canal d'admission (2b) dans l'espace de réception de roue (7) de telle sorte que le dispositif d'étranglement (8 ; 17), dans sa position fermée, ferme essentiellement complètement l'au moins un canal d'admission (2b) et donc la liaison d'écoulement vers l'espace de réception de roue (7), **caractérisé en ce que**
le dispositif d'étranglement (8 ; 17) est réalisé par au moins un clapet pivotant, ou
dans le cas d'une turbine à gaz d'échappement à double flux (15), les deux canaux d'admission (2b) sont chacun pourvus d'un dispositif d'étranglement (17), les dispositifs d'étranglement (17) étant formés par un double clapet commandant les deux canaux d'admission (2b) en section transversale.

2. Turbocompresseur à gaz d'échappement selon la revendication 1, **caractérisé en ce que** dans le boîtier (2 ; 16) de la turbine à gaz d'échappement (1 ; 15) est prévu un seul canal d'admission (2b) par flux de gaz d'échappement, qui débouche dans un espace de réception de roue (7) associé.

3. Turbocompresseur à gaz d'échappement selon la revendication 1 ou 2, **caractérisé en ce que** l'au moins un canal d'admission (2b) présente dans la zone d'embouchure une section transversale de canal plus petite que dans la zone de l'entrée de turbine (2a) située en amont, de préférence pourvue d'une bride de raccordement.

4. Turbocompresseur à gaz d'échappement selon l'une quelconque des revendications précédentes, **caractérisé en ce que** l'espace de réception de roue (7) présente, pour réaliser la zone d'embouchure du canal d'admission (2b) ainsi que pour réaliser au moins une section de paroi du canal d'admission (2b), une section de paroi de boîtier (2c) renfoncée en forme de spirale vers l'intérieur vers la roue de turbine (3).

5. Turbocompresseur à gaz d'échappement selon l'une quelconque des revendications précédentes, **caractérisé en ce que** le clapet pivotant réalisant le dispositif d'étranglement (8 ; 17), dans sa position complètement ouverte, repose avec son côté tourné vers le canal d'admission (2b) et/ou l'espace de réception de roue (7), essentiellement à fleur de surface avec la zone de paroi de boîtier adjacente, dans un évidement (2e) côté paroi de boîtier et réalise une section de paroi de boîtier essentiellement lisse et/ou plane en continu.

6. Turbocompresseur à gaz d'échappement selon l'une quelconque des revendications précédentes, **caractérisé en ce que** le clapet (8 ; 17) est réglable par l'intermédiaire d'un axe de pivotement (9) parallèle à l'axe de rotation de la roue de turbine (3).

7. Turbocompresseur à gaz d'échappement selon l'une quelconque des revendications précédentes, **caractérisé en ce que** le dispositif d'étranglement (8 ; 17) est réalisé de telle sorte que, dans au moins une position ouverte définie, il dirige le courant de gaz d'échappement en forme de buse sur la roue de turbine (3) .

8. Turbocompresseur à gaz d'échappement selon l'une quelconque des revendications précédentes, **caractérisé en ce que**
le dispositif d'étranglement (8 ; 17) est positionné en amont dans le cas d'une turbine à gaz d'échappement (1 ; 15) à géométrie de turbine variable et d'un dispositif de guidage (5) agencé autour de la roue de turbine (3) ainsi qu'au voisinage immédiat du dispositif de guidage (5), et
le dispositif d'étranglement (8 ; 17) est réalisé de telle sorte qu'il dirige le courant de gaz d'échappement sur le dispositif de guidage (5) dans au moins une position ouverte, notamment dans au moins une position intermédiaire définie entre une position entièrement fermée et une position entièrement ouverte.

9. Turbocompresseur à gaz d'échappement selon la revendication 8, **caractérisé en ce que**, dans un mode de freinage de moteur défini, le dispositif d'étranglement (8 ; 17) et le dispositif de guidage (5) peuvent être actionnés ensemble pour obtenir un débit de gaz défini de la turbine à gaz d'échappement (1 ; 15) et peuvent être réglés dans des positions définies, adaptées les unes aux autres.

10. Turbocompresseur à gaz d'échappement selon l'une quelconque des revendications précédentes, **caractérisé en ce que**, dans le cas d'un turbocompresseur à gaz d'échappement avec un dispositif Waste-Gate pour abaisser la pression de suralimentation dans la conduite d'air de suralimentation du moteur à combustion interne, un canal (11) d'évacuation de gaz d'échappement part du boîtier (2 ; 16) en aval du dispositif d'étranglement (8 ; 17).

11. Turbocompresseur à gaz d'échappement selon l'une quelconque des revendications précédentes, **caractérisé en ce que** le dispositif d'étranglement (8 ; 17) et/ou, dans le cas d'une géométrie de turbine variable, le dispositif de guidage (5) sont commandés dans le mode de freinage de moteur au moins en fonction de la pression de suralimentation dans une conduite de pression de suralimentation du moteur à combustion interne.

12. Procédé d'exploitation d'un turbocompresseur à gaz d'échappement selon l'une quelconque des revendications précédentes, **caractérisé en ce que** l'agencement présente un dispositif de commande et/ou de régulation au moyen duquel la position du dispositif d'étranglement (8 ; 17) et/ou d'un dispositif de guidage (5) d'une turbine à géométrie variable est commandée en fonction de paramètres définis du mode de freinage de moteur.
